# EUROPÄISCHE PATENTSCHRIFT

(11) **EP 4 524 084 B1**
(45) Veröffentlichungstag und Bekanntmachung des Hinweises auf die Patenterteilung: **17.12.2025**
(21) Anmeldenummer: 24198954.0
(22) Anmeldetag: 06.09.2024
(51) Int. Cl.: G01C 21/20, B66F 9/075, B66F 9/24, G06T 7/579

(54) **VERFAHREN ZUM BETREIBEN EINES FLURFÖRDERZEUGS IN EINEM LAGER UND FLURFÖRDERZEUG**
METHOD FOR OPERATING AN INDUSTRIAL TRUCK IN A WAREHOUSE AND INDUSTRIAL TRUCK
PROCÉDÉ POUR FAIRE FONCTIONNER UN CHARIOT DE MANUTENTION DANS UN ENTREPÔT ET CHARIOT DE MANUTENTION

(30) Priorität: 18.09.2023 DE 102023125123
(43) Veröffentlichungstag der Anmeldung: 19.03.2025
(73) Patentinhaber: Jungheinrich AG, 22047 Hamburg (DE)
(72) Erfinder: Jörgens, Frauke, 25436 Tornesch (DE); Kopelke, Jan, 22927 Großhansdorf (DE); Altmann, Tony, 24616 Brokstedt (DE); Grabbe, Florian, 22335 Hamburg (DE); Ahrens, Stefan, 25373 Ellerhoop (DE); Quickert, Steffen, 27793 Wildeshausen (DE); Prochnow, Thorge, 22415 Hamburg (DE); Hartwig, Jobst, 25421 Pinneberg (DE)
(74) Vertreter: Hauck Patent- und Rechtsanwälte PartmbB

(56) Entgegenhaltungen:
- DE-A1- 102020 126 401
- DE-A1- 102020 215 149
- US-A1- 2022 363 528

## Beschreibung

Die Erfindung betrifft ein Verfahren zum Betreiben eines Flurförderzeugs in einem Lager und ein Flurförderzeug.

Bei derartigen Verfahren sind unterschiedliche Assistenzsysteme bekannt geworden, die eine Bedienperson unterstützen können. Beispielsweise ist bekannt, die Umgebung eines Flurförderzeugs mit einer 3D-Kamera (zum Beispiel einer *Time-of-Flight-*Kamera) zu erfassen, um ein dreidimensionales Bild der Umgebung zu erhalten, oder LIDAR-Scanner oder Abstandssensoren einzusetzen, um Hindernisse zu erkennen. Ebenfalls bekannt sind Navigationssysteme, die eine funkbasierte (UWB, Bluetooth) oder optische Ortung der Position des Flurförderzeugs vornehmen können. All diese Ansätze sind jedoch aufgrund der erforderlichen Hardware am Flurförderzeug und zum Teil zusätzlich im Lager sehr teuer, und im Betrieb tendenziell fehleranfällig.

Aus der Computerwissenschaft sind unter den Schlagworten *Structure from Motion* (SfM) und *Visual Simultaneous Localization and Mapping* (vSLAM) Verfahren bekannt geworden, mit denen auf Grundlage zweidimensionaler Bilder dreidimensionale Strukturen rekonstruiert werden können.

Aus der Druckschrift DE 10 2020 126 401 A1 ist ein Verfahren bekannt geworden, bei dem mit einer 2D-Kamera Bilder aus zwei unterschiedlichen Kamerapositionen erfasst werden, wobei die von der 2D-Kamera zwischen dem Erfassen der beiden Bilder zurückgelegte Strecke bekannt ist. In einem Überlappungsbereich der beiden Bilder kann unter Berücksichtigung der zurückgelegten Strecke ein Abstandswert eines Punkts von dem Flurförderzeug berechnet werden. Dieser Abstandswert kann eine Bedienperson beim Ein- und Auslagern von Waren unterstützen, insbesondere um die Position der Gabelzinken genau zu steuern, oder um während der Fahrt einen Abstand von einem Regal oder einer Wand einzuhalten.

Die Druckschrift US 2022/363528 A1 offenbart ein Verfahren zum Betrieb eines Flurförderzeugs gemäß dem Oberbegriff des Anspruchs 1.

Davon ausgehend ist es die Aufgabe der Erfindung, ein Verfahren zum Betreiben eines Flurförderzeugs sowie ein Flurförderzeug zur Verfügung zu stellen, das eine Bedienperson noch besser unterstützen und die Betriebssicherheit erhöhen kann.

Diese Aufgabe wird gelöst durch das Verfahren zum Betreiben eines Flurförderzeugs mit den Merkmalen des Anspruchs 1. Vorteilhafte Ausgestaltungen sind in den sich anschließenden Unteransprüchen angegeben.

Das Verfahren dient zum Betreiben eines Flurförderzeugs, das eine Kamera aufweist, die in einer festen Höhe an dem Flurförderzeug angeordnet ist, und umfasst die folgenden Schritte:
- Erfassen einer Folge zweidimensionaler Bilder mit der Kamera,
- Berechnen einer dreidimensionalen Punktwolke auf Grundlage der Folge zweidimensionaler Bilder,
- Berechnen eines Skalierungsfaktors für die Punktwolke auf Grundlage eines ersten Punkts der Punktwolke und eines zweiten Punkts der Punktwolke, die jeweils eine definierte Position im Raum repräsentieren,
- Bereitstellen einer skalierten, dreidimensionalen Punktwolke, die eine Umgebung des Flurförderzeugs in dem Lager repräsentiert,
- Fortlaufendes Berechnen einer aktuellen Position des Flurförderzeugs im Raum auf Grundlage einer aktuellen Position der Kamera, die anhand aktueller zweidimensionaler Bilder und der skalierten, dreidimensionalen Punktwolke bestimmt wird,
- Auswerten der aktuellen Position des Flurförderzeugs zur Navigation im Lager und/oder zur Kollisionsvermeidung.

Das Flurförderzeug kann ein beliebiges Flurförderzeug sein, das zum Ein- und Auslagern von Waren in einem Lager eingesetzt wird, beispielsweise ein Gabelstapler, ein Schubmaststapler, ein Komissionierer oder ein Niederhubfahrzeug. Insbesondere handelt es sich um ein Flurförderzeug, das von einer mitfahrenden Bedienperson gesteuert wird. Das Verfahren ist jedoch auch für ein autonom fahrendes Flurförderzeug geeignet.

Das Flurförderzeug weist eine Kamera auf, die in einer festen Höhe an dem Flurförderzeug angeordnet sein, etwa am Dach einer Fahrerkabine. Durch die stets gleiche, bekannte Höhe der Kamera vereinfacht sich die Auswertung der erfassten Bilder. Bevorzugt ist die Kamera so angeordnet, dass sie einen Bereich erfasst, der in Fahrtrichtung vor oder hinter dem Flurförderzeug liegt. Es ist jedoch auch eine davon abweichende, zum Beispiel seitliche Blickrichtung der Kamera möglich.

Die Kamera liefert eine Folge zweidimensionaler Bilder, insbesondere in einer vorgegebenen zeitlichen Abfolge, zum Beispiel in einem Videostrom mit einer vorgegebenen Bildrate. Es kann sich bei der Kamera insbesondere um eine digitale Videokamera handeln. Das Erfassen der Folge zweidimensionaler Bilder geschieht unter anderem, während sich das Flurförderzeug in dem Lager bewegt, sodass sich die Kamera beim Erfassen der einzelnen Bilder der Folge in unterschiedlichen Positionen befinden kann. Die Umgebung wird daher aus unterschiedlichen Blickwinkeln und Positionen erfasst.

Darum kann auf Grundlage der zweidimensionalen Bilder der Folge eine Punktwolke berechnet werden. Die Punktwolke enthält zu jedem Punkt der Punktwolke räumliche Koordinaten, die eine Position im Raum angeben, an der der zugehörige Punkt angeordnet ist. In diese Sinne repräsentiert jeder Punkt der Punktwolke eine Position im Raum. Allerdings können auf Grundlage der zweidimensionalen Bilder zunächst nur relative Positionen im Raum berechnet werden, keine absoluten. Die Punktwolke ist daher unskaliert und gibt nur die Positionen der Punkte relativ zueinander an. Absolute Koordinaten und absolute Abstände (zum Beispiel in Metern) zwischen zwei Positionen im Raum, die jeweils durch einen Punkt der Punktwolke repräsentiert werden, können nicht angegeben werden.

Hierfür wird in einem weiteren Verfahrensschritt ein Skalierungsfaktor berechnet. Dies gelingt auf Grundlage zweier Punkte der Punktwolke, die jeweils eine definierte Position im Raum repräsentieren. Damit ist gemeint, dass insbesondere ein Abstand zwischen den Positionen im Raum bekannt ist. Dieser kann zum Abstand der beiden Punkte in der Punktwolke in Beziehung gesetzt werden, um den Skalierungsfaktor zu berechnen.

Bei der Erfindung wird für die weiteren Verfahrensschritte eine skalierte, dreidimensionale Punktwolke bereitgestellt, die eine Umgebung des Flurförderzeugs in dem Lager repräsentiert. Hierfür können im einfachsten Fall die unskalierte Punktewolke und der Skalierungsfaktor bereitgestellt werden. Es ist jedoch auch möglich, anhand der unskalierten Punktwolke und des Skalierungsfaktors eine neue, skalierte Punktwolke zu berechnen und für die weitere Verwendung zu speichern.

Die bislang erläuterten Schritte dienen einer Initialisierung des Verfahrens. Die während der Initialisierung bereitgestellte, skalierte, dreidimensionale Punktwolke stellt für die nachfolgenden, während des Betriebs des Flurförderzeugs fortlaufend ausgeführten Verfahrensschritte eine notwendige Voraussetzung dar. Allerdings kann die skalierte, dreidimensionale Punktwolke während des Betriebs des Flurförderzeugs weiter verbessert werden. Das Erfassen zweidimensionaler Bilder mit der Kamera erfolgt auch während der nach der Initialisierung auszuführenden Schritte des Verfahrens, und die dabei erfassten Bilder können gegebenenfalls zur fortlaufenden Verbesserung und/oder Aktualisierung der skalierten, dreidimensionalen Punktwolke ausgewertet werden.

Nach der Initialisierung erfolgt ein fortlaufendes Berechnen einer aktuellen Position des Flurförderzeugs im Raum auf Grundlage einer aktuellen Position der Kamera, die anhand aktueller zweidimensionaler Bilder und der skalierten, dreidimensionalen Punktwolke bestimmt wird. Dabei kann die Bestimmung der aktuellen Position der Kamera im Rahmen eines Optimierungsverfahrens erfolgen, bei dem die erfassten, zweidimensionalen Bilder mit zugehörigen Positionen der Kamera abgeglichen wird. Für die Bestimmung der aktuellen Position der Kamera kann insbesondere ein vSLAM-Verfahren verwendet werden, was nachfolgend noch erläutert wird. Ergebnis der fortlaufenden Berechnung ist eine aktuelle Position des Flurförderzeug im Raum.

Im letzten Schritt des Verfahrens wird die aktuelle Position des Flurförderzeugs im Raum zur Navigation im Lager und/oder zur Kollisionsvermeidung ausgewertet. Für eine Kollisionsvermeidung kann beispielsweise überprüft werden, ob ein in der skalierten, dreidimensionalen Punktwolke identifiziertes Objekt einen vorgegebenen Mindestabstand von der Position des Flurförderzeugs unterschreitet, insbesondere unter Berücksichtigung einer aktuellen Fahrtrichtung und -geschwindigkeit des Flurförderzeugs. Die Informationen über den aktuellen Bewegungszustand des Flurförderzeugs können aus der fortlaufend berechneten, aktuellen Position des Flurförderzeugs abgeleitet werden. Es ist jedoch ebenso gut möglich, weitere Sensoren des Flurförderzeugs und/oder von einer für die Fahrsteuerung des Flurförderzeugs zuständigen Recheneinheit bereitgestellte Daten einzubeziehen. Droht eine Kollision, kann ein optisches oder akustisches Warnsignal ausgegeben werden. Alternativ oder zusätzlich ist ein Eingriff in die Fahrzeugsteuerung möglich, beispielsweise eine automatische Geschwindigkeitsreduzierung oder ein Notstopp.

Die aktuelle Position des Flurförderzeugs kann ebenfalls zur Navigation im Lager ausgewertet werden, d. h. insbesondere, dass einer Bedienperson eine Route zu einem anzusteuernden Lagerplatz angezeigt und/oder vorgeschlagen oder ein sonstiger, zur Steuerung des Flurförderzeugs hilfreicher Hinweis gegeben wird.

Ein besonderer Vorteil der Erfindung ist, dass die aktuelle Position des Flurförderzeugs in vielen Fällen nutzbar gemacht werden kann, ohne spezielle oder besonders kostspielige Hardware einzusetzen. Viele Flurförderzeuge sind bereits mit einer Kamera ausgestattet, zum Beispiel für eine unmittelbare, visuelle Unterstützung der Bedienperson durch Anzeigen eines Bereichs vor dem Flurförderzeug/vor dem Lasttragmittel auf einem Bildschirm in der Fahrerkabine. Eine solche Kamera kann in der Regel für das erfindungsgemäße Verfahren genutzt werden. Die übrigen Schritte des Verfahrens können im Wesentlichen mittels Software realisiert werden, die auf einem Bordcomputer oder einem sonstigen Rechner des Flurförderzeugs ausgeführt werden kann.

Zudem können mittels der beschriebenen Auswertung der zweidimensionalen Bilder besonders robuste Daten über die Umgebung erhalten werden. Insbesondere kann die Punktwolke und/oder der Skalierungsfaktor im Betrieb des Flurförderzeugs fortlaufend oder schrittweise durch Auswertung immer weiterer Folgen von Bildern verbessert und aktualisiert werden.

In einer Ausgestaltung wird beim Berechnen der Punktwolke ein Algorithmus angewendet wird, der simultan Positionen der Kamera und Punkte der Umgebung ermittelt. Dieser Ansatz wird als *Simultaneous Localization and Mapping* (SLAM) bezeichnet. Er beruht auf einer simultanen Optimierung zahlreicher Parameter, die einerseits die unterschiedlichen Kamerapositionen, anderseits die in der Umgebung erfassten Punkte beschreiben. Die Optimierung wird so durchgeführt, dass die Abweichungen zwischen dem durch die Parameter beschriebenen Modell und den erfassten Bildern minimiert wird. Ergebnis ist die unskalierte Punktwolke.

In einer Ausgestaltung wird beim Berechnen des Skalierungsfaktors ein Objekt in der Punktwolke erkannt, das an einer bekannten Position im Raum angeordnet ist, und der erste Punkt repräsentiert dieses Objekt. Zum Erkennen des Objekts in der Punktwolke kann auf Methoden der Mustererkennung zurückgegriffen werden. Als einer der beiden Referenzpunkte für die Berechnung des Skalierungsfaktors kann insbesondere ein fest im Lager angeordnetes Objekt gewählt werden, beispielsweise eine Lichtquelle, ein Träger, ein Fenster, ein Dachbalken oder dergleichen oder eine gezielt angebrachte Markierung zum Beispiel an einer Wand des Lagers.

In einer Ausgestaltung ist der erste Punkt ein markanter Punkt des Objekts, beispielsweise ein Eckpunkt, eine Kante oder ein Mittelpunkt. Dies ist eine gute Lösung insbesondere bei Objekten mit bekannter Geometrie wie beispielsweise einem standardisierten Ladungsträger wie einer Euro-Palette.

In einer Ausgestaltung ist das Objekt eine Bodenebene und der erste Punkt gibt eine Höhe der Bodenebene an. Die Wahl einer Bodenebene als Referenzpunkt bietet mehrere Vorteile. Zum einen kann die Bodenebene aufgrund ihrer großen Fläche und weil sie in einem typischen Lager in der Regel völlig eben ist, besonders einfach erkannt werden. Zum anderen bietet die Höhe der Bodenebene einen besonders universell nutzbaren Referenzpunkt, der für alle Bereiche des Lagers von Bedeutung und in den meisten der zweidimensionalen Bilder sichtbar ist.

In einer Ausgestaltung repräsentiert der zweite Punkt dasselbe Objekt wie der erste Punkt und das Objekt weist eine bekannte Größe auf, die dem Abstand zwischen den beiden von den Punkten repräsentierten Positionen im Raum entspricht. Beispielsweise können die beiden Punkte zwei voneinander entfernte Enden eines Regals bekannter Länge und/oder Höhe repräsentieren.

In einer Ausgestaltung repräsentiert der zweite Punkt eine Position der Kamera. Ist die Position der Kamera zu dem betrachteten Zeitpunkt bekannt, kann sie als zweiter Referenzpunkt genutzt werden. Dies gilt insbesondere für die Höhe der Kamera, die bei fester Anordnung der Kamera am Flurförderzeug immer konstant ist. Wird als erster Punkt ein Punkt der Bodenebene gewählt, ist der Abstand der beiden Positionen im Raum - insbesondere in senkrechter Richtung - unmittelbar bekannt und für die Berechnung des Skalierungsfaktor gut geeignet.

In einer Ausgestaltung wird beim Berechnen des Skalierungsfaktors eine Bewegung des Flurförderzeugs gemessen und daraus wird ein Abstand zwischen den beiden Positionen im Raum, die von dem ersten Punkt und von dem zweiten Punkt repräsentiert werden, ermittelt. Das Messen der Bewegung kann den gesamten Bewegungsablauf verfolgen, es ist jedoch auch ausreichend, den Anfangs- und Endpunkt der Bewegung zu erfassen. Zum Messen der Bewegung können unterschiedliche Techniken eingesetzt werden, beispielsweise ein Drehgeber, der die Drehstellung oder Drehbewegung eines Rads des Flurförderzeugs erfasst, ein Beschleunigungssensor oder ein Gyroskop am Flurförderzeug. Alternativ kann ein optisches oder funkbasiertes Ortungssystem des Flurförderzeugs die Bewegung messen bzw. den Anfangs- und Endpunkt der Bewegung feststellen. Die beiden Positionen im Raum, die zum Berechnen des Skalierungsfaktors herangezogen werden, können insbesondere die beiden Positionen der Kamera am Anfang und Ende der betrachteten Bewegung sein.

In einer Ausgestaltung schließt das Verfahren den Betrieb mindestens eines weiteren Flurförderzeugs in dem Lager ein, wobei das weitere Flurförderzeug eine weitere Kamera aufweist, die in einer festen Höhe an dem weiteren Flurförderzeug angeordnet ist, und wobei das weitere Flurförderzeug eine weitere Folge zweidimensionaler Bilder mit der weiteren Kamera erfasst, wobei die skalierte, dreidimensionale Punktwolke auf Grundlage der Folge und der weiteren Folge zweidimensionaler Bilder bereitgestellt wird. Es werden also mindestens ein weiteres Flurförderzeug und die von dessen Kamera erfassten Bilder in die eingangs erläuterten Initialisierungsschritte einbezogen. Dadurch kann eine besonders aussagekräftige, skalierte Punktwolke bereitgestellt werden, bzw. das Bereitstellen der Punktwolke oder deren Aktualisierung gelingt in kürzerer Zeit.

In einer Ausgestaltung wird die skalierte, dreidimensionale Punktwolke fortlaufend aktualisiert. Die Unterstützung bei Navigation bzw. Kollisionsvermeidung kann dann immer auf Grundlage einer aktuellen und besonders aussagekräftigen Abbildung des Lagers in der skalierten, dreidimensionalen Punktwolke erfolgen.

Die oben angegebene Aufgabe wird ebenfalls gelöst durch das Flurförderzeug mit den Merkmalen des Anspruchs 11.

Das Flurförderzeug hat ein System zur Navigation und/oder Kollisionsvermeidung in einem Lager, wobei das System folgendes aufweist:
- eine elektronische Steuerung,
- eine in einer festen Höhe an dem Flurförderzeug angeordnete Kamera, die mit der elektronischen Steuerung verbunden und dazu ausgebildet ist, eine Folge zweidimensionaler Bilder zu erfassen, wobei die Steuerung dazu eingerichtet ist,
- auf Grundlage der Folge zweidimensionaler Bilder eine dreidimensionale Punktwolke zu berechnen,
- auf Grundlage eines ersten Punkts der Punktwolke und eines zweiten Punkts der Punktwolke, die jeweils eine definierte Position im Raum repräsentieren, einen Skalierungsfaktor für die Punktwolke zu berechnen,
- eine skalierte, dreidimensionale Punktwolke bereitzustellen, die eine Umgebung des Flurförderzeugs in dem Lager repräsentiert,
- fortlaufend auf Grundlage einer aktuellen Position der Kamera, die anhand aktueller zweidimensionaler Bilder und der skalierten, dreidimensionalen Punktwolke bestimmt wird, eine aktuelle Position des Flurförderzeugs im Raum zu berechnen, und
- die aktuelle Position des Flurförderzeugs zur Navigation und/oder zur Kollisionsvermeidung in dem Lager auszuwerten.

Zur Erläuterung des Flurförderzeugs wird auf die obigen Erläuterungen des Verfahrens verwiesen, die entsprechend gelten. Das Flurförderzeug kann insbesondere zur Ausführung des Verfahrens nach einem der Verfahrensansprüche eingerichtet sein. Damit ist insbesondere gemeint, dass die elektronische Steuerung dazu eingerichtet ist, die jeweiligen Verfahrensschritte auszuführen, in einigen Fällen in Kombination mit einem weiteren Flurförderzeug.

Nachfolgend wird die Erfindung anhand eines in Figuren dargestellten Ausführungsbeispiels näher erläutert. Es zeigen:
- Fig. 1: ein Flurförderzeug in einem Lager in einer schematischen Ansicht von oben und
- Fig. 2: eine skalierte, dreidimensionale Punktwolke in einer schematischen Darstellung.

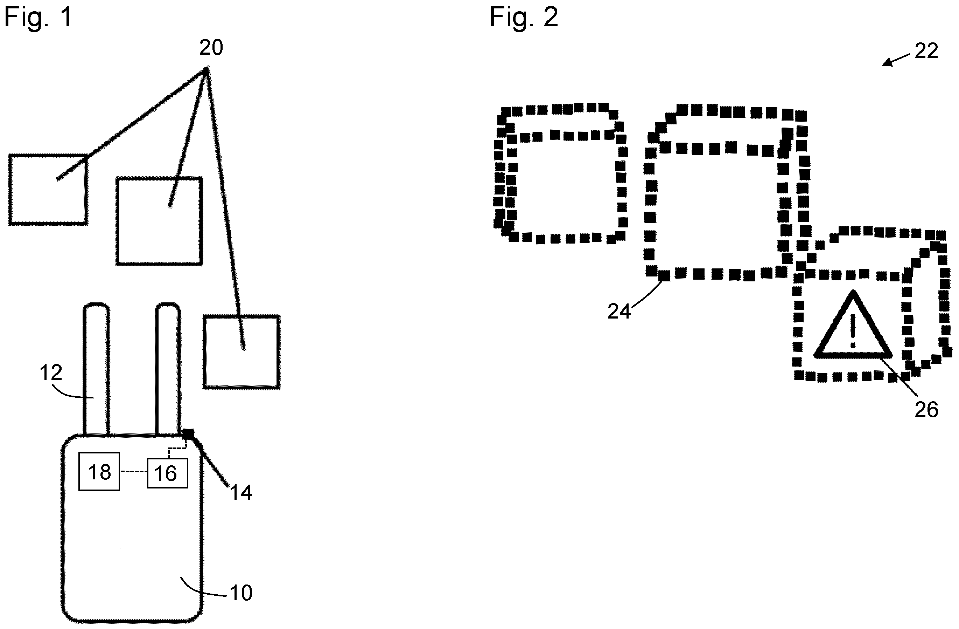

Figur 1 zeigt ein Flurförderzeug 10 mit einem Lasttragmittel 12. Auf einer festen Höhe ist an dem Flurförderzeug 10 eine Kamera 14 angeordnet.

In dem Flurförderzeug 10 befindet sich eine elektronische Steuerung 16, die mit der Kamera 14 verbunden ist. Ebenfalls mit der elektronischen Steuerung 16 verbunden ist eine Anzeige 18, die eine Bedienperson bei der Navigation im Lager unterstützt, indem sie beispielsweise den Weg zu einer anzufahrenden Palette anzeigt oder bei Gefahr einer Kollision ein Alarmsignal anzeigt.

In dem Lager befinden sich in einer Umgebung des Flurförderzeugs eine Reihe von Gegenständen 20, die mögliche Hindernisse darstellen.

Mithilfe der elektronischen Steuerung 16 wird an Bord des Flurförderzeugs 10 das erfindungsgemäße Verfahren ausgeführt, d. h. es werden mit der Kamera 14 Folgen von zweidimensionalen Bildern erfasst, auf deren Grundlage zunächst eine unskalierte, dreidimensionale Punktwolke berechnet wird.

Nach dem Berechnen eines Skalierungsfaktors für die Punktwolke wird eine skalierte, dreidimensionale Punktwolke 22 zur Verfügung gestellt, die in Fig. 2 veranschaulicht ist. Man erkennt in der Punktwolke 22 zahlreiche Punkte 24, die die drei quaderförmigen Gegenstände 20 aus Fig. 1 repräsentieren.

Im skizzierten Beispiel befindet sich der in Fig. 1 ganz rechts gezeigte Gegenstand 20 relativ nahe an dem Flurförderzeug 10, sodass eine Kollisionsgefahr besteht. Zur Kollisionsvermeidung wird auf der Anzeige 18 des Flurförderzeugs 10 ein Warnhinweis 26 angezeigt. Der Warnhinweis 26 ist aufgrund seiner Anordnung dem nahe am Flurförderzeug 50 befindlichen Gegenstand 20 zugeordnet.

### Liste der Bezugszeichen

- 10: Flurförderzeug
- 12: Lasttragmittel
- 14: Kamera
- 16: elektronische Steuerung
- 18: Anzeige
- 20: Gegenstand
- 22: Punktwolke
- 24: Punkt
- 26: Warnhinweis

## Patentansprüche

1. Verfahren zum Betreiben eines Flurförderzeugs (10) in einem Lager, wobei das Flurförderzeug eine Kamera (14) aufweist, die in einer festen Höhe an dem Flurförderzeug angeordnet ist, und das Verfahren die folgenden Schritte umfasst:
• Erfassen einer Folge zweidimensionaler Bilder mit der Kamera (14),
• Berechnen einer dreidimensionalen Punktwolke auf Grundlage der Folge zweidimensionaler Bilder,
wobei das Verfahren **dadurch gekennzeichnet ist, dass** es ferner die folgenden zusätzlichen Schritte umfasst:
• Berechnen eines Skalierungsfaktors für die Punktwolke auf Grundlage eines ersten Punkts der Punktwolke und eines zweiten Punkts der Punktwolke, die jeweils eine definierte Position im Raum repräsentieren,
• Bereitstellen einer skalierten, dreidimensionalen Punktwolke (22), die eine Umgebung des Flurförderzeugs (10) in dem Lager repräsentiert, und
• Fortlaufendes Berechnen einer aktuellen Position des Flurförderzeugs (10) im Raum auf Grundlage einer aktuellen Position der Kamera (14), die anhand aktueller zweidimensionaler Bilder und der skalierten, dreidimensionalen Punktwolke (22) bestimmt wird,
• Auswerten der aktuellen Position des Flurförderzeugs (10) zur Navigation im Lager und/oder zur Kollisionsvermeidung.

2. Verfahren nach Anspruch 1, wobei beim Berechnen der Punktwolke ein Algorithmus angewendet wird, der simultan Positionen der Kamera (14) und Punkte der Umgebung ermittelt.

3. Verfahren nach Anspruch 1 oder 2, wobei beim Berechnen des Skalierungsfaktors ein Objekt in der Punktwolke erkannt wird, das an einer bekannten Position im Raum angeordnet ist, und der erste Punkt dieses Objekt repräsentiert.

4. Verfahren nach einem der Ansprüche 1 bis 3, wobei der erste Punkt ein markanter Punkt des Objekts ist, beispielsweise ein Eckpunkt, eine Kante oder ein Mittelpunkt.

5. Verfahren nach Anspruch 3 oder 4, wobei das Objekt eine Bodenebene ist und der erste Punkt eine Höhe der Bodenebene angibt.

6. Verfahren nach einem der Ansprüche 3 bis 5, wobei der zweite Punkt dasselbe Objekt repräsentiert wie der erste Punkt und das Objekt eine bekannte Größe aufweist, die dem Abstand zwischen den beiden von den Punkten repräsentierten Positionen im Raum entspricht.

7. Verfahren nach einem der Ansprüche 1 bis 6, wobei der zweite Punkt eine Position der Kamera (14) repräsentiert.

8. Verfahren nach einem der Ansprüche 1 bis 7, wobei beim Berechnen des Skalierungsfaktors eine Bewegung des Flurförderzeugs gemessen und daraus ein Abstand zwischen den beiden Positionen im Raum, die von dem ersten Punkt und von dem zweiten Punkt repräsentiert werden, ermittelt wird.

9. Verfahren nach einem der Ansprüche 1 bis 8, wobei das Verfahren den Betrieb mindestens eines weiteren Flurförderzeugs in dem Lager einschließt, wobei das weitere Flurförderzeug eine weitere Kamera aufweist, die in einer festen Höhe an dem weiteren Flurförderzeug angeordnet ist, und wobei das weitere Flurförderzeug eine weitere Folge zweidimensionaler Bilder mit der weiteren Kamera erfasst, wobei die skalierte, dreidimensionale Punktwolke (22) auf Grundlage der Folge und der weiteren Folge zweidimensionaler Bilder bereitgestellt wird.

10. Verfahren nach einem der Ansprüche 1 bis 9, wobei die skalierte, dreidimensionale Punktwolke (22) fortlaufend aktualisiert wird.

11. Flurförderzeug (10) mit einem System zur Navigation und/oder Kollisionsvermeidung in einem Lager, wobei das System folgendes aufweist:
• eine elektronische Steuerung (16),
• eine in einer festen Höhe an dem Flurförderzeug (10) angeordnete Kamera (14), die mit der elektronischen Steuerung (16) verbunden und dazu ausgebildet ist, eine Folge zweidimensionaler Bilder zu erfassen, wobei die Steuerung (16) dazu eingerichtet ist,
• auf Grundlage der Folge zweidimensionaler Bilder eine dreidimensionale Punktwolke zu berechnen,
• auf Grundlage eines ersten Punkts der Punktwolke und eines zweiten Punkts der Punktwolke, die jeweils eine definierte Position im Raum repräsentieren, einen Skalierungsfaktor für die Punktwolke zu berechnen,
• eine skalierte, dreidimensionale Punktwolke (22) bereitzustellen, die eine Umgebung des Flurförderzeugs (10) in dem Lager repräsentiert,
• fortlaufend auf Grundlage einer aktuellen Position der Kamera (14), die anhand aktueller zweidimensionaler Bilder und der skalierten, dreidimensionalen Punktwolke (22) bestimmt wird, eine aktuelle Position des Flurförderzeugs (10) im Raum zu berechnen, und
• die aktuelle Position des Flurförderzeugs (10) zur Navigation und/oder zur Kollisionsvermeidung in dem Lager auszuwerten.

## Claims

1. A method for operating an industrial truck (10) in a warehouse, wherein the industrial truck has a camera (14) which is arranged at a fixed height on the industrial truck, and the method comprises the following steps:
• recording a sequence of two-dimensional images with the camera (14),
• calculating a three-dimensional point cloud on the basis of the sequence of two-dimensional images,
wherein the method is **characterized in that** it further comprises the following additional steps:
• calculating a scaling factor for the point cloud on the basis of a first point of the point cloud and a second point of the point cloud, which each represent a defined position in space,
• providing a scaled, three-dimensional point cloud (22) which represents surroundings of the industrial truck (10) in the warehouse, and
• continuously calculating a current position of the industrial truck (10) in space on the basis of a current position of the camera (14), which is ascertained based on current two-dimensional images and the scaled, three-dimensional point cloud (22),
• evaluating the current position of the industrial truck (10) for navigating in the warehouse and/or for preventing collisions.

2. The method according to claim 1, wherein an algorithm that simultaneously determines positions of the camera (14) and points in the surroundings is applied when calculating the point cloud.

3. The method according to claim 1 or 2, wherein an object that is arranged at a known position in space is recognized in the point cloud when the scaling factor is calculated, and the first point represents this object.

4. The method according to any one of claims 1 to 3, wherein the first point is a distinctive point of the object, for example a corner point, an edge, or a center point.

5. The method according to claim 3 or 4, wherein the object is a floor level and the first point indicates a height of the floor level.

6. The method according to any one of claims 3 to 5, wherein the second point represents the same object as the first point and the object has a known size that corresponds to the distance between the two positions in space represented by the points.

7. The method according to any one of claims 1 to 6, wherein the second point represents a position of the camera (14).

8. The method according to any one of claims 1 to 7, wherein a movement of the industrial truck is measured and a distance between the two positions in space represented by the first point and by the second point is determined from said movement when the scaling factor is calculated.

9. The method according to any one of claims 1 to 8, wherein the method includes operating at least one further industrial truck in the warehouse, wherein the further industrial truck has a further camera which is arranged at a fixed height on the further industrial truck, and wherein the further industrial truck records a further sequence of two-dimensional images with the further camera, wherein the scaled, three-dimensional point cloud (22) is provided on the basis of the sequence and the further sequence of two-dimensional images.

10. The method according to any one of claims 1 to 9, wherein the scaled, three-dimensional point cloud (22) is updated continuously.

11. An industrial truck (10) having a system for navigating and/or preventing collisions in a warehouse, wherein the system has the following:
• an electronic controller (16),
• a camera (14) that is arranged at a fixed height on the industrial truck (10) and is connected to the electronic controller (16) and is designed to record a sequence of two-dimensional images, wherein the controller (16) is configured to
• calculate a three-dimensional point cloud on the basis of the sequence of two-dimensional images,
• calculate a scaling factor for the point cloud on the basis of a first point of the point cloud and a second point of the point cloud, which each represent a defined position in space,
• provide a scaled, three-dimensional point cloud (22) which represents surroundings of the industrial truck (10) in the warehouse,
• continuously calculate a current position of the industrial truck (10) in space on the basis of a current position of the camera (14), which is ascertained based on current two-dimensional images and the scaled, three-dimensional point cloud (22), and
• evaluate the current position of the industrial truck (10) for navigating and/or preventing collisions in the warehouse.

## Revendications

1. Procédé destiné à faire fonctionner un chariot de manutention (10) dans un entrepôt, dans lequel le chariot de manutention présente une caméra (14) disposée à une hauteur fixe sur le chariot de manutention, et le procédé comporte les étapes suivantes :
• détection d'une suite d'images bidimensionnelles à l'aide de la caméra (14),
• calcul d'un nuage de points tridimensionnel sur la base de la suite d'images bidimensionnelles,
dans lequel le procédé est **caractérisé en ce qu'**il comporte en outre les étapes supplémentaires suivantes :
• calcul d'un facteur de mise à l'échelle pour le nuage de points sur la base d'un premier point du nuage de points et d'un deuxième point du nuage de points, lesquels représentent respectivement une position définie dans l'espace,
• mise à disposition d'un nuage de points tridimensionnel mis à l'échelle (22), lequel représente un environnement du chariot de manutention (10) dans l'entrepôt, et
• calcul continu d'une position actuelle du chariot de manutention (10) dans l'espace sur la base d'une position actuelle de la caméra (14), laquelle est déterminée à l'aide d'images bidimensionnelles actuelles et du nuage de points tridimensionnel mis à l'échelle (22),
• évaluation de la position actuelle du chariot de manutention (10) pour la navigation dans l'entrepôt et/ou pour l'évitement de collisions.

2. Procédé selon la revendication 1, dans lequel, lors du calcul du nuage de points, un algorithme déterminant simultanément des positions de la caméra (14) et de points de l'environnement est utilisé.

3. Procédé selon la revendication 1 ou 2, dans lequel, lors du calcul du facteur de mise à l'échelle, un objet disposé à une position connue dans l'espace est détecté dans le nuage de points, et le premier point représente cet objet.

4. Procédé selon l'une des revendications 1 à 3, dans lequel le premier point est un point marquant de l'objet, par exemple un sommet, un bord ou un centre.

5. Procédé selon la revendication 3 ou 4, dans lequel l'objet est un niveau de sol et le premier point indique une hauteur du niveau de sol.

6. Procédé selon l'une des revendications 3 à 5, dans lequel le deuxième point représente le même objet que le premier point et l'objet présente une taille connue, laquelle correspond à la distance entre les deux positions représentées par les points dans l'espace.

7. Procédé selon l'une des revendications 1 à 6, dans lequel le deuxième point représente une position de la caméra (14).

8. Procédé selon l'une des revendications 1 à 7, dans lequel, lors du calcul du facteur de mise à l'échelle, un déplacement du chariot de manutention est mesuré et une distance entre les deux positions dans l'espace, lesquelles sont représentées par le premier point et par le deuxième point, est déterminée à partir de celui-ci.

9. Procédé selon l'une des revendications 1 à 8, dans lequel le procédé englobe le fonctionnement d'au moins un autre chariot de manutention dans l'entrepôt, dans lequel l'autre chariot de manutention présente une autre caméra, laquelle est disposée à une hauteur fixe sur l'autre chariot de manutention, et dans lequel l'autre chariot de manutention détecte une autre suite d'images bidimensionnelles à l'aide de l'autre caméra, dans lequel le nuage de points tridimensionnel (22) est mis à disposition sur la base de la suite et de l'autre suite d'images bidimensionnelles.

10. Procédé selon l'une des revendications 1 à 9, dans lequel le nuage de points tridimensionnel (22) est actualisé en continu.

11. Chariot de manutention (10) doté d'un système de navigation et/ou d'évitement de collisions dans un entrepôt, dans lequel le système présente les éléments suivants :
• une commande électronique (16),
• une caméra (14) disposée sur le chariot de manutention (10), laquelle est reliée à la commande électronique (16) et conçue pour détecter une suite d'images bidimensionnelles, dans lequel la commande (16) est configurée pour
• calculer un nuage de points tridimensionnel sur la base de la suite d'images bidimensionnelles,
• calculer un facteur de mise à l'échelle pour le nuage de points sur la base d'un premier point du nuage de points et d'un deuxième point du nuage de points, lesquels représentent respectivement une position définie dans l'espace,
• mettre à disposition un nuage de points tridimensionnel mis à l'échelle (22), lequel représente un environnement du chariot de manutention (10) dans l'entrepôt,
• calculer en continu une position actuelle du chariot de manutention (10) dans l'espace sur la base d'une position actuelle de la caméra (14), laquelle est déterminée à l'aide d'images bidimensionnelles actuelles et du nuage de points tridimensionnel mis à l'échelle (22),
• évaluer la position actuelle du chariot de manutention (10) pour la navigation et/ou pour l'évitement de collisions dans l'entrepôt.
